# EUROPEAN PATENT APPLICATION

(11) **EP 4 369 509 A1**
(43) Date of publication of application: **15.05.2024**
(21) Application number: 22837392.4
(22) Date of filing: 09.06.2022
(51) Int. Cl.: H01M 50/538, H01M 10/04, H01M 10/0587, H01M 50/152, H01M 50/167, H01M 50/179, H01M 50/533, H01M 50/548

(54) **CYLINDRICAL BATTERY**

(30) Priority: 05.07.2021 JP 2021111411
(71) Applicant: Panasonic Energy Co., Ltd., Osaka 570-8511 (JP)
(72) Inventor: HARAGUCHI Shin, Kadoma-shi, Osaka 571-0057 (JP); OKUTANI Oose, Kadoma-shi, Osaka 571-0057 (JP); OKIMOTO Ryota, Kadoma-shi, Osaka 571-0057 (JP)
(74) Representative: Novagraaf International SA
(86) International application number: PCT/JP2022/023235
(87) International publication number: WO 2023/281973

(57) **Abstract**

A cylindrical battery (10) comprises an electrode body (14) in which a long positive electrode (11) having a plurality of positive electrode lead portions (20) and a long negative electrode (12) are wound with a separator (13) therebetween, a bottomed cylindrical external can (16) that accommodates the electrode body (14), and a sealing body (17) which is crimp fixed to an opening of the external can (16). The sealing body (17) has a sealing plate (27) and a current collector plate (40) having a through-hole, and the plurality of positive electrode lead portions (20) pass through the through-hole in the current collector plate (40) and are bent and joined above the current collector plate (40).

## Description

### TECHNICAL FIELD

The present disclosure relates to a cylindrical battery.

### BACKGROUND

Conventional cylindrical batteries include a cylindrical battery disclosed in Patent Literature 1. The cylindrical battery disclosed therein includes a wound electrode assembly, a sealing assembly, a plurality of positive electrode leads extending from a positive electrode of the electrode assembly, a current collector plate to which the plurality of positive electrode leads are electrically connected, and a metal lead that electrically connects between the current collector plate and the sealing assembly. This cylindrical battery includes the plurality of positive electrode leads electrically connected to the strip-shaped positive electrode of the electrode assembly, thereby achieving a reduction in internal resistance of the battery and a reduction in power loss.

### CITATION LIST

### PATENT LITERATURE

Patent Literature 1: Japanese Unexamined Patent Application Publication No. 2018-056091

### SUMMARY

### TECHNICAL PROBLEM

The above-described cylindrical battery includes the current collector plate and the sealing assembly electrically connected via the metal lead, resulting in an increased internal resistance of the battery as the resistance of the metal lead is added to the internal resistance of the battery. Therefore, the present disclosure is directed to providing a cylindrical battery with a low internal resistance.

### SOLUTION TO PROBLEM

To achieve this goal, a cylindrical battery according to the present disclosure includes an electrode assembly including a first electrode having an elongated shape and a second electrode having an elongated shape, the first electrode having a plurality of lead portions, the first electrode and the second electrode being wound with a separator interposed therebetween; an outer housing can having a cylindrical shape with a closed bottom, the outer housing can housing the electrode assembly; and a sealing assembly fixed by crimping to an opening of the outer housing can, wherein the sealing assembly includes a sealing plate and a current collector plate, the current collector plate having a through hole, and wherein the plurality of lead portions extend through the through hole of the current collector plate and are folded back and joined on the current collector plate.

### ADVANTAGEOUS EFFECTS OF INVENTION

A cylindrical battery according to the present disclosure enables a reduction in internal resistance of the battery.

### BRIEF DESCRIPTION OF DRAWINGS

[FIG. 1]

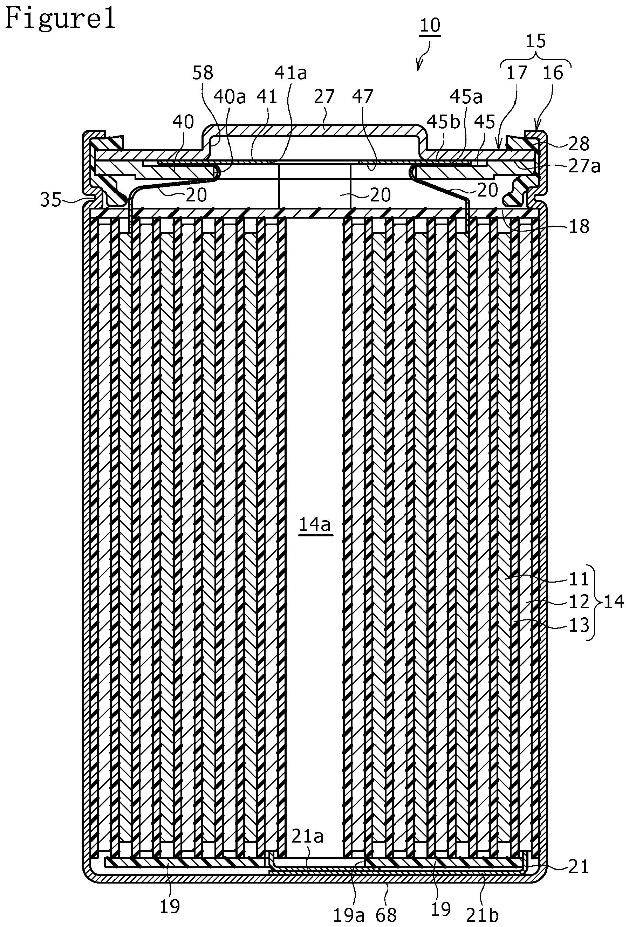

   FIG. 1 is a cross-sectional view of a cylindrical battery according to an embodiment of the present disclosure taken in the axial direction.
[FIG. 2]

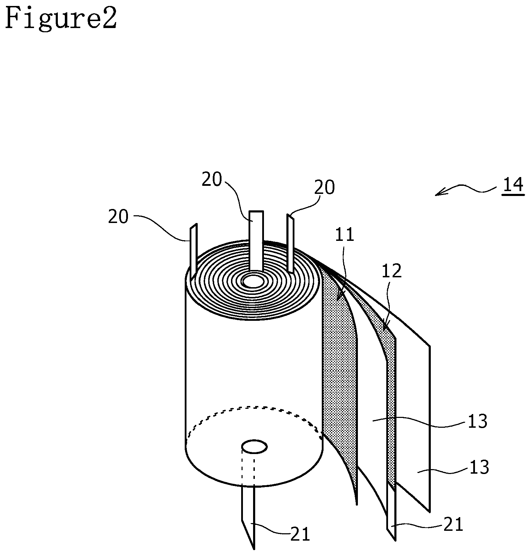

   FIG. 2 is a perspective view of an electrode assembly.
[FIG. 3A]

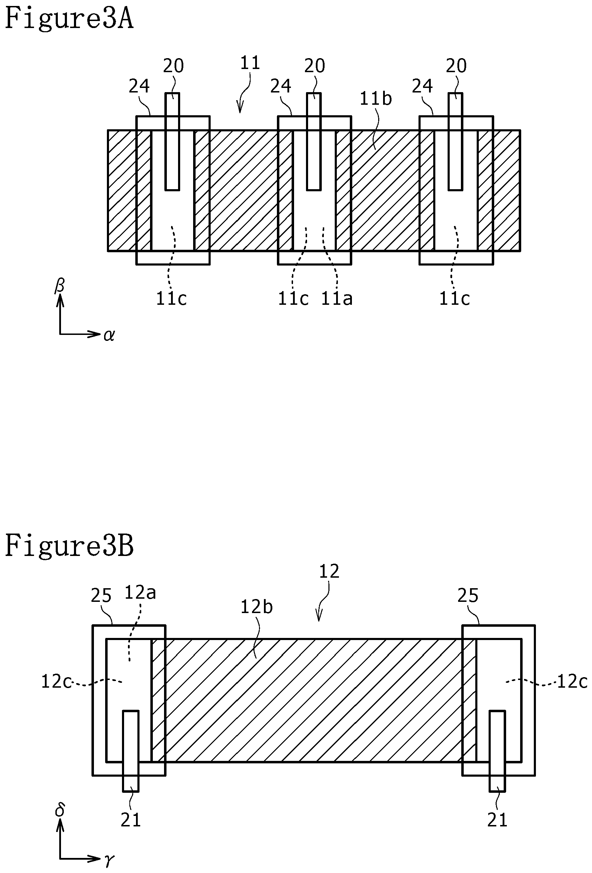

   FIG. 3A is a schematic plan view of a positive electrode.
[FIG. 3B]
   FIG. 3B is a schematic plan view of a negative electrode.
[FIG. 4]

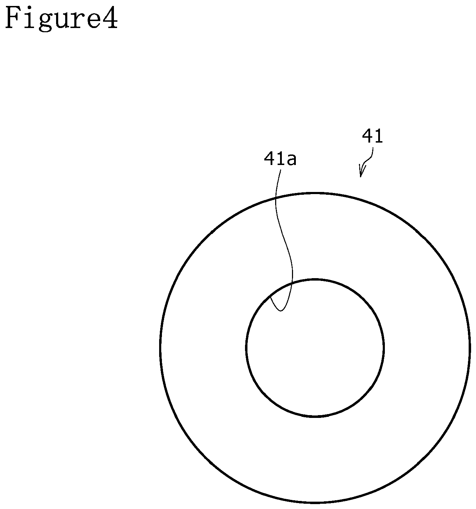

   FIG. 4 is a plan view of a metal plate as viewed from one side in the thickness direction.
[FIG. 5]

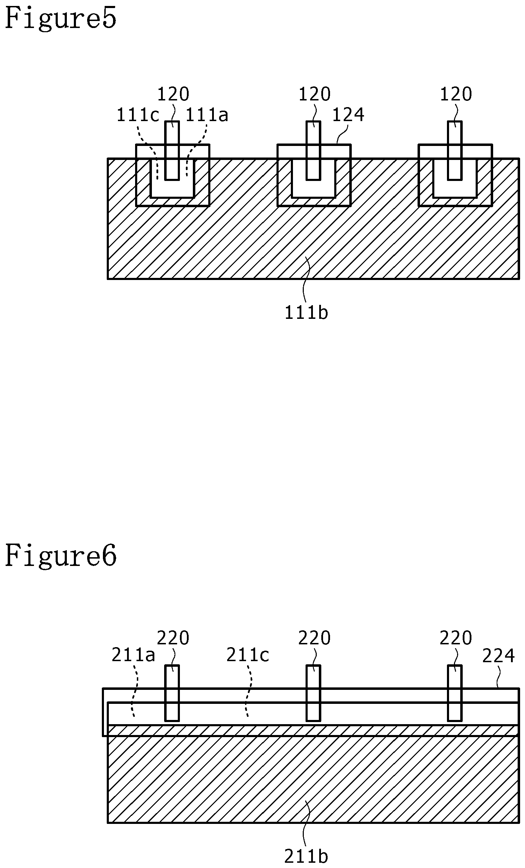

   FIG. 5 is a schematic plan view of a positive electrode according to a modification example.
[FIG. 6]
   FIG. 6 is a schematic plan view of a positive electrode according to another modification example.
[FIG. 7]

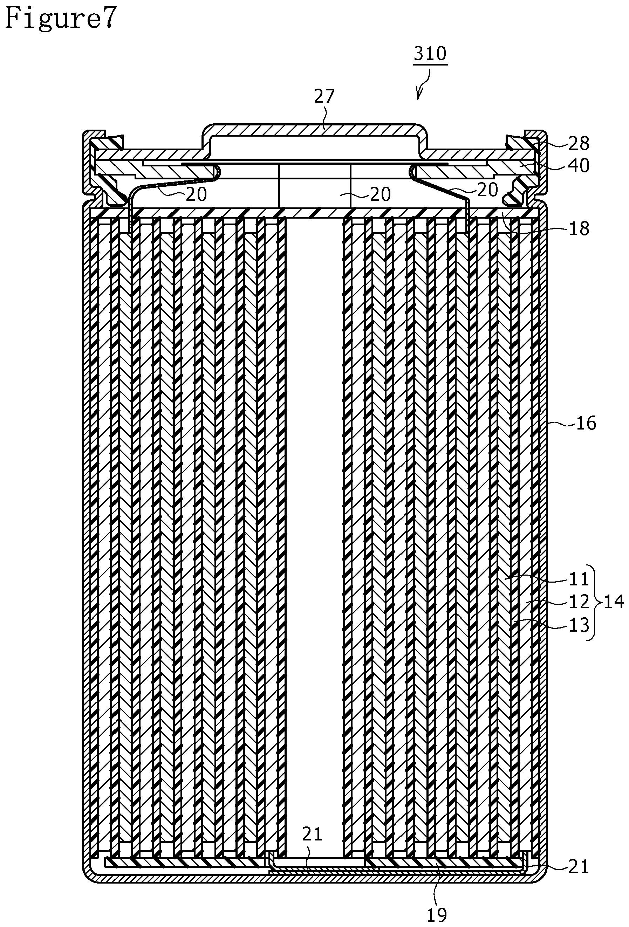

   FIG. 7 is a cross-sectional view of a cylindrical battery according to a modification example taken in the axial direction.

### DESCRIPTION OF EMBODIMENTS

A cylindrical battery according to an embodiment of the present disclosure will be described in detail below with reference to the drawings. It should be noted that a cylindrical battery according to the present disclosure may be a primary battery or may be a secondary battery. The battery may include an aqueous electrolyte or may include a non-aqueous electrolyte. As a cylindrical battery 10 according to an embodiment, the following description describes by way of example a non-aqueous electrolyte secondary battery (lithium ion battery) that includes a non-aqueous electrolyte, but a cylindrical battery according to the present disclosure is not limited to this embodiment.

While the following description may include a plurality of embodiments or modification examples, it is then contemplated from the outset that their features may be combined as desired to form a new embodiment. Regarding the embodiments described below, the same reference numerals in the drawings denote the same components, and the same description is not repeated. The drawings include schematic diagrams, in which the ratios of dimensions, such as lengths, widths, and heights, of the illustrated members may differ from diagram to diagram. The side toward a sealing assembly 17 of a battery case 15 in the axial direction (height direction) is herein referred to as "upper" side, and the side toward a bottom 68 of an outer housing can 16 in the axial direction as "lower" side. Among the constituent elements described below, constituent elements that are not recited in an independent claim which defines the broadest concept are optional and not essential.

FIG. 1 is a cross-sectional view of the cylindrical battery 10 according to an embodiment of the present disclosure taken in the axial direction. In this embodiment, a positive electrode 11 is used as the first electrode, and a negative electrode 12 is used as the second electrode. As illustrated in FIG. 1, the cylindrical battery 10 includes a wound electrode assembly 14, a non-aqueous electrolyte (not illustrated), the outer housing can 16 that houses the electrode assembly 14 and the non-aqueous electrolyte, and the sealing assembly 17. The electrode assembly 14, which includes the positive electrode 11, the negative electrode 12, and a separator 13 interposed between the positive electrode 11 and the negative electrode 12, has a wound configuration in which the positive electrode 11 and the negative electrode 12 are wound with the separator 13 therebetween. The battery case 15 is composed of the outer housing can 16 having a cylindrical shape with a closed bottom and the sealing assembly 17 covering an opening of the outer housing can 16.

The non-aqueous electrolyte includes a non-aqueous solvent and an electrolyte salt dissolved in the non-aqueous solvent. Examples of the non-aqueous solvent include esters, ethers, nitriles, amides, and mixed solvents of two or more thereof. The non-aqueous solvent may contain a halogen-substituted product of these solvents in which hydrogen atoms of the solvents are, at least in part, substituted with a halogen atom such as fluorine. It should be noted that the non-aqueous electrolyte is not limited to liquid electrolytes but may be a solid electrolyte that includes, for example, a gel polymer. A lithium salt such as LiPF₆ is used as the electrolyte salt.

FIG. 2 is a perspective view of the electrode assembly 14. As illustrated in FIG. 2, the electrode assembly 14 includes the positive electrode 11 having an elongated shape, the negative electrode 12 having an elongated shape, and two separators 13 having an elongated shape. Three positive electrode lead portions 20 are joined and electrically connected to the positive electrode 11, and two negative electrode lead portions 21 are joined and electrically connected to the negative electrode 12. To retard precipitation of lithium, the negative electrode 12 has a size slightly larger than the positive electrode 11, and has longer lengths than the positive electrode 11 both in the length direction and the width direction (shorter length direction). The two separators 13 have a size slightly larger than at least the positive electrode 11 and are disposed so that the positive electrode 11 is interposed between them.

FIG. 3A is a schematic plan view of the positive electrode 11, and FIG. 3B is a schematic plan view of the negative electrode 12. The positive electrode 11 includes a positive electrode current collector 11a and positive electrode mixture layers 11b that are formed on both sides of the positive electrode current collector 11a. Examples of the positive electrode current collector 11a include foil of metal that is stable in an electric potential range of the positive electrode 11, such as aluminum or an aluminum alloy, and a film having such metal disposed in its surface layer. The positive electrode mixture layers 11b contain a positive electrode active material, a conductive agent, and a binder. The positive electrode 11 can be prepared by, for example, applying positive electrode mixture slurry containing, for example, a positive electrode active material, a conductive agent, and a binder, to the positive electrode current collector 11a, drying the coating, and then compressing it to form the positive electrode mixture layers 11b on both sides of the positive electrode current collector 11a.

The positive electrode active material is composed of a lithium-containing metal composite oxide as the main ingredient. Examples of a metal element contained in the lithium-containing metal composite oxide include Ni, Co, Mn, Al, B, Mg, Ti, V, Cr, Fe, Cu, Zn, Ga, Sr, Zr, Nb, In, Sn, Ta, and W. A preferable lithium-containing metal composite oxide is, for example, a composite oxide that contains at least one of Ni, Co, Mn, and Al.

Examples of the conductive agent contained in the positive electrode mixture layers include carbon materials such as carbon black, acetylene black, Ketjenblack, and graphite. Examples of the binder contained in the positive electrode mixture layers include polytetrafluoroethylene (PTFE), polyvinylidene fluoride (PVdF), and other fluorocarbon resins, polyacrylonitrile (PAN), polyimide resins, acrylic resins, and polyolefin resins. One or more of these resins may be used in combination with, for example, a cellulose derivative such as carboxymethylcellulose (CMC) or a salt thereof, or polyethylene oxide (PEO).

As illustrated in FIG. 3A, the positive electrode 11 includes three positive electrode current collector exposed portions 11c that are substantially evenly spaced in the length direction indicated by arrow α. The positive electrode current collector exposed portions 11c are predefined areas in the length direction, in which the positive electrode mixture layer 11b is not applied anywhere across the positive electrode current collector 11a in the width direction indicated by arrow β. The above-described three positive electrode lead portions 20 are joined to the three positive electrode current collector exposed portions 11c. The three positive electrode lead portions 20 are joined in a manner in which they are substantially evenly spaced in the length direction of the strip-shaped positive electrode current collector 11a, thereby enabling a shorter electric current path in the length direction of the positive electrode 11, which enables a reduction in internal resistance of the cylindrical battery 10. The positive electrode lead portions 20 are covered with insulating tapes 24, thereby suppressing a short circuit between the positive electrode 11 and the negative electrode 12. It is preferable that, as illustrated in FIG. 3A, the insulating tapes 24 cover the entirety of the positive electrode current collector exposed portions 11c.

As illustrated in FIG. 3B, the negative electrode 12 includes a negative electrode current collector 12a and negative electrode mixture layers 12b that are formed on both sides of the negative electrode current collector 12a. Examples of the negative electrode current collector 12a include foil of metal that is stable in an electric potential range of the negative electrode 12, such as copper or a copper alloy, and a film having such metal disposed in its surface layer. The negative electrode mixture layers 12b contain a negative electrode active material and a binder. The negative electrode 12 can be prepared by, for example, applying negative electrode mixture slurry containing, for example, a negative electrode active material and a binder, to the negative electrode current collector 12a, drying the coating, and then compressing it to form the negative electrode mixture layers on both sides of the current collector.

Typically, a carbon material that reversibly occludes and releases lithium ions is used as the negative electrode active material. A preferable carbon material is graphite including natural graphite such as flake graphite, massive graphite, and earthy graphite, and artificial graphite such as massive artificial graphite and graphitized mesophase carbon microbeads. The negative electrode mixture layers may contain, as the negative electrode active material, a Si material containing silicon (Si). Additionally, metal other than Si that forms an alloy with lithium, an alloy that contains such metal, a compound that contains such metal, or the like may also be used as the negative electrode active material.

As with the positive electrode 11, examples of the binder contained in the negative electrode mixture layers 12b include fluorocarbon resins, PAN, polyimide resins, acrylic resins, and polyolefin resins, and preferably styrene-butadiene rubber (SBR) or a modified product thereof is used. In addition to SBR or the like, the negative electrode mixture layers may contain, for example, CMC or a salt thereof, polyacrylic acid (PAA) or a salt thereof, or polyvinyl alcohol.

As illustrated in FIG. 3B, the negative electrode 12 includes two negative electrode current collector exposed portions 12c at the winding-start end and the winding-finish end in the length direction indicated by arrow γ. The negative electrode current collector exposed portions 12c are predefined areas in the length direction, in which the negative electrode mixture layer 12b is not applied anywhere across the negative electrode current collector 12a in the width direction indicated by arrow δ. The above-described two negative electrode lead portions 21 are joined to the two negative electrode current collector exposed portions 12c. The two negative electrode lead portions 21 are joined to both ends of the strip-shaped negative electrode current collector 12a in the length direction, thereby suppressing a current flowing along a long distance in the length direction of the negative electrode 12, which enables a reduction in negative electrode resistance of the cylindrical battery 10. The negative electrode lead portions 21 are covered with insulating tapes 25, thereby suppressing a short circuit between the positive electrode 11 and the negative electrode 12. It is preferable that, as illustrated in FIG. 3B, the insulating tapes 25 cover the entirety of the negative electrode current collector exposed portions 12c.

As the separator 13, a porous sheet having ion permeability and insulating property is used. Specific examples of the porous sheet include a microporous thin film, a woven fabric, and a non-woven fabric. As the material for the separator 13, polyolefin resins such as polyethylene and polypropylene, cellulose, and the like are preferable. The separator 13 may have either a single-layer structure or a multi-layer structure. The separator 13 may have, on its surface, a heat-resistant layer or the like. It should be noted that the negative electrode 12 may constitute the winding-start end of the electrode assembly 14, but typically the separator 13 extends beyond the winding-start side end of the negative electrode 12, so that the winding-start side end of the separator 13 constitutes the winding-start end of the electrode assembly 14.

As illustrated in FIG. 1, the cylindrical battery 10 includes an insulating plate 18 that is disposed on the upper side of the electrode assembly 14. The positive electrode lead portions 20 attached to the positive electrode 11 pass through a through hole in the insulating plate 18 and extend toward the sealing assembly 17. The sealing assembly 17 includes a current collector plate 40 and a sealing plate 27. The current collector plate 40, which is an annular plate member made of metal, has a through hole 40a in a center portion in the radial direction. The sealing plate 27, which is a plate-shaped member made of metal with no through hole, covers the opening of the outer housing can 16. The sealing assembly 17 also includes a metal plate 41. The metal plate 41 is an annular member made of metal. As illustrated in FIG. 4, the metal plate 41 has a through hole 41a that is composed of a cylindrical hole.

The positive electrode lead portions 20 extend from the positive electrode 11 through the through hole 40a of the current collector plate 40 and are folded back to extend along an upper surface 45 of the current collector plate 40. The tip portions of the positive electrode lead portions 20 are located between the upper surface 45 of the current collector plate 40 and a lower surface 47 of the metal plate 41 in a sandwiched manner. The positive electrode lead portions 20 are joined to the upper surface 45 of the current collector plate 40. The current collector plate 40 and the metal plate 41 are also joined together, and the positive electrode lead portions 20 and the metal plate 41 are also joined together. These can be joined together with the tip portions of the positive electrode lead portions 20 sandwiched between the current collector plate 40 and the metal plate 41 by, for example, laser welding from the side opposite the side on which the current collector plate 40 is located in the thickness direction of the metal plate 41. However, the current collector plate 40 does not have to be joined to the metal plate 41, and the positive electrode lead portions 20 do not have to be joined to the metal plate 41.

As illustrated in FIG. 1, an outer circumferential portion of the current collector plate 40 is in contact with the sealing plate 27. Preferably, the outer circumferential portion 40 of the current collector plate is joined to the sealing plate 27 by, for example, laser welding. The annular upper surface 45 of the current collector plate 40 has an annular recess 45a located toward the inside of the outer circumferential portion in the radial direction. A bottom surface 45b of the recess 45a extends in a direction that is substantially perpendicular to the axial direction.

As the upper surface 45 of the current collector plate 40 has the recess 45a which is concave toward the lower side, there is provided an empty space between the sealing plate 27 and the recess 45a of the current collector plate 40. Thus, the positive electrode lead portions 20 are received in the recess 45a.

The cylindrical battery 10 further includes an insulating plate 19 having an annular shape that is disposed on the lower side of the electrode assembly 14. A first negative electrode lead portion 21a, which is joined to the winding-start side end of the negative electrode 12, passes through 19a of the insulating plate 19 and is folded back to extend toward a hollow portion 14a of the electrode assembly 14.

A second negative electrode lead portion 21b, which is joined to the winding-finish side end of the negative electrode 12, passes outside the insulating plate 19 and is folded back to overlap with the first negative electrode lead portion 21a. The portion where the first negative electrode lead portion 21a and the second negative electrode lead portion 21b overlap with each other is subjected to resistance welding using a welding rod that is inserted into the hollow portion 14a of the electrode assembly 14, so as to be joined to an inner surface of the bottom 68 of the outer housing can 16.

The outer housing can 16 includes an annular grooved portion 35 in a portion of the cylindrical outer surface in the axial direction. The grooved portion 35 can be formed by, for example, spinning processing toward the inside in the radial direction to make a portion of the cylindrical outer surface concave toward an inward side in the radial direction. The sealing assembly 17 is disposed on the grooved portion 35 and is fixed by crimping to the opening of the outer housing can 16 with a gasket 28 therebetween.

A space between the outer housing can 16 and the sealing assembly 17 is sealed by the gasket 28 having an annular shape, thereby hermetically sealing the space inside the battery case 15. The gasket 28 is held between the outer housing can 16 and the sealing assembly 17, insulating the sealing assembly 17 from the outer housing can 16. That is, the gasket 28 serves as a sealing member to maintain airtightness inside the battery and as an insulating member to insulate the outer housing can 16 and the sealing assembly 17 from each other.

In the cylindrical battery 10, the sealing plate 27 electrically connected to the positive electrode lead portions 20 serves as the positive electrode terminal, and the outer housing can 16 electrically connected to the negative electrode lead portions 21 serves as the negative electrode terminal. In the illustrated embodiment, an example in which the sealing plate 27 constitutes a terminal cap is given, but the sealing plate 27 may be disposed between the current collector plate 40 and a terminal cap. Although not illustrated in the figures, the cylindrical battery 10 may have a circular or C-shaped inscription either on the bottom 68 of the outer housing can 16 or on the sealing plate 27. With this structure, upon abnormal heat generation of the cylindrical battery 10, either the outer housing can 16 or the sealing plate 27 may break starting from the inscription, thereby letting high-temperature gas in the battery easily escape to the outside and providing increased safety. With the sealing plate 27 disposed between the current collector plate 40 and a terminal cap, the terminal cap may have a ventilation hole, providing the sealing plate 27 with the function of serving as an explosion-proof vent.

### <Effects and Advantages of Cylindrical Battery 10>

The cylindrical battery 10 achieves a significantly reduced internal resistance of the battery, as the positive electrode 11 includes a plurality of positive electrode lead portions 20, the plurality of positive electrode lead portions 20 being connected directly to the sealing assembly 17 which serves as the positive electrode terminal.

As the current collector plate 40 has the through hole 40a through which the plurality of positive electrode lead portions 20 pass, the positive electrode lead portions 20 are easily joined to the current collector plate 40 even if the positions of the plurality of positive electrode lead portions 20 vary. As the through hole 40a is formed toward the inside of the outer circumferential portion of the current collector 40 in the radial direction, the current collector plate 40 can be fixed by crimping to the opening of the outer housing can 16 of the outer housing can, constituting a portion of the sealing assembly 17. Therefore, the cylindrical battery 10 is prepared easily.

With the sealing assembly 17 including the metal plate 41, the positive electrode lead portions 20 can be held between the current collector plate 40 and the metal plate 41. Thus, the positive electrode lead portions 20 can be joined in a stable state in which these are under pressure toward the current collector plate 40 (by, for example, laser welding), enabling an increased stability in joining the positive electrode lead portions 20 to the current collector plate 40.

With the metal plate 41 having the through hole 40a, an upper space 58 defined by the sealing plate 27 and the metal plate 41 can be filled with gas. Therefore, an increase in internal pressure inside the cylindrical battery 10 can be suppressed. During preparation of the cylindrical battery 10, as the through hole 40a of the metal plate 41 can be used to inject a non-aqueous electrolyte from above the metal plate 41 into the side on which the electrode assembly 14 is located, the cylindrical battery 10 is prepared easily. With the current collector plate 40 having the recess 45a, as the positive electrode lead portions 20 are received in the recess 45a, the sealing plate 27 is disposed on the current collector plate 40 easily.

### <Examples>

### [Preparation of Positive Electrode]

As the positive electrode active material, LiNi_{0.8}Co_{0.15}Al_{0.05}O² was used. A positive electrode mixture paste was prepared by mixing 100 parts by mass of the positive electrode active material, 1.7 parts by mass of polyvinylidene fluoride as the binder, and 2.5 parts by mass of acetylene black as the conductive agent into a dispersion medium. This positive electrode mixture paste was applied on both sides of a positive electrode current collector consisting of aluminum foil except portions where positive electrode lead portions made of aluminum were to be joined, the applied paste was dried, and then the positive electrode current collector having the positive electrode mixture paste applied thereon was rolled into a predetermined thickness, thereby preparing an elongated positive electrode. The elongated positive electrode was cut into pieces of a predetermined size, thereby preparing a positive electrode for use in a cylindrical battery. Three positive electrode lead portions were joined to the positive electrode current collector by ultrasonic welding at intervals in the length direction of the positive electrode current collector.

### [Preparation of Negative Electrode]

As the negative electrode active material, easily graphitized carbon was used. A negative electrode mixture paste was prepared by stirring 100 parts by mass of the negative electrode active material, 0.6 parts by mass of polyvinylidene fluoride as the binder, 1 parts by mass of carboxymethylcellulose as the thickener, and an appropriate amount of water in a double arm kneader. This negative electrode mixture paste was applied on both sides of a negative electrode current collector consisting of copper foil except portions where negative electrode lead portions were to be joined, the applied paste was dried, and then the negative electrode current collector having the negative electrode mixture paste applied thereon was rolled into a predetermined thickness, thereby preparing an elongated negative electrode plate. The elongated negative electrode was cut into pieces of a predetermined size, thereby preparing a negative electrode for use in a cylindrical battery. Negative electrode lead portions consisting of a Ni-Cu-Ni cladding material were connected to negative electrode current collector exposed portions provided on both ends of the negative electrode current collector in the length direction by ultrasonic welding.

### [Preparation of Non-aqueous Electrolyte Solution]

As the electrolyte salt, lithium hexafluorophosphate (LiPF₆) was dissolved in a mixed solvent of ethylene carbonate (EC), diethyl carbonate (DEC), and ethyl methyl carbonate (EMC) to achieve 1.0 mol/L, thereby preparing a non-aqueous electrolyte solution.

### [Assembly of Cylindrical Battery]

The positive electrode and the negative electrode were spirally wound with a microporous film made of polyolefin interposed therebetween as the separator, thereby preparing an electrode assembly. The electrode assembly was inserted into an outer housing can with a disc-shaped insulating plate interposed therebetween to join the two negative electrode lead portions joined to the negative electrode and the inner surface of the bottom of the outer housing can to each other by resistance welding. Subsequently, the plurality of positive electrode lead portions joined to the positive electrode were folded back and held on the current collector plate made of aluminum, and then covered by a metal plate made of aluminum from above, holding all of the positive electrode lead portions on the tip side between the current collector plate and the metal plate. Subsequently, the metal plate, all of the positive electrode lead portions, and the current collector plate were joined together by laser welding from above the metal plate. An electrolyte solution serving as the non-aqueous electrolyte was then injected from above the metal plate into the side on which the electrode assembly was located in the outer housing can through a through hole in the metal plate and a through hole in the current collector plate. Subsequently, a sealing plate made of aluminum was held on the current collector plate and subjected to laser welding. In the end, a sealing assembly composed of the current collector plate, the metal plate, and the sealing plate was fixed by crimping to the outer housing can with a gasket interposed therebetween, thereby preparing a cylindrical battery. For the sealing plate, a cladding material having iron, nickel, or stainless steel layered on aluminum may be used in terms of mechanical strength or heat resistance. For the sealing plate, stainless steel may be used alone as it is stably present even when exposed to the positive electrode potential.

### <Modification Examples>

The present disclosure is not limited to the above-described embodiments and their modifications, but various improvements or changes are possible within the scope of the features recited in the claims of the present application and their equivalents.

For example, while three positive electrode lead portions 20 are joined to the positive electrode 11 in the above-described embodiment, any number of positive electrode lead portions, not less than two, may be joined to the positive electrode. The positive electrode lead portions may be formed by locally stretching metal foil that constitutes the positive electrode current collector. Also, while two negative electrode lead portions 21 are joined to the negative electrode 12, a plurality of negative electrode lead portions do not necessarily have to be joined to the negative electrode 12, and any number of negative electrode lead portions, not less than one, may be joined to the negative electrode. The negative electrode lead portions may be formed by locally stretching metal foil that constitutes the negative electrode current collector. An end of the negative electrode current collector on the winding-finish side in the winding direction may be brought into contact with the inner surface of the outer housing can, thereby electrically connecting between the negative electrode and the outer housing can.

As illustrated in FIG. 5, positive electrode current collector exposed portions 111c may be provided in predefined areas in the length direction of a positive electrode current collector 111a, only in part in the width direction. Positive electrode lead portions 120 may be joined to the positive electrode current collector exposed portions 111c with the vicinities of the positive electrode current collector exposed portions 111c covered with insulating tapes 124. This structure enables an increase in the area where a positive electrode mixture layer 11 1b is formed, enabling an increase in capacity.

As illustrated in FIG. 6, with a positive electrode mixture layer 211b absent in an end on one side in the width direction of a positive electrode current collector 211a throughout its length in the length direction, a positive electrode current collector exposed portion 211c may be provided in an end on this side throughout the length in the length direction. Positive electrode lead portions 220 may be joined to the positive electrode current collector exposed portion 211c with the vicinity of the positive electrode current collector exposed portion 211c covered with an insulating tape 224 throughout the length in the length direction. This structure enables an increase in flexibility in positions where the positive electrode lead portions 220 are joined.

The foregoing has described a structure wherein the upper surface 45 of the current collector plate 40 has the recess 45a in which the plurality of positive electrode lead portions 20 are received. However, the lower surface of the sealing plate may have a recess in which the plurality of positive electrode lead portions 20 are received, instead of having a recess in the upper surface of the current collector plate.

The metal plate 41 does not necessarily have to have the through hole 41a. As illustrated in FIG. 7, a cylindrical battery 310 does not have to have a metal plate.

Although the foregoing has described a structure wherein the current collector plate 40 has the through hole 40a at the center in the radial direction, the current collector plate may have a through hole in a portion other than the center in the radial direction. For example, the current collector plate may have a through hole at a position that axially coincides with positions where the positive electrode lead portions are joined.

Although the foregoing has described a structure wherein the sealing plate 27 serves as a terminal cap, the sealing plate 27 may be disposed between the current collector plate 40 and a terminal cap. For example, the sealing assembly 17 may be provided with an explosion-proof mechanism by having a ventilation hole in the terminal cap and using, as the sealing plate, a metal member that will break when the battery internal pressure reaches a predetermined value.

Although the foregoing has described a structure wherein the positive electrode 11 serves as the first electrode, and wherein the negative electrode 12 serves as the second electrode, it is only required that the first electrode and the second electrode have polarities different from each other, and the negative electrode may serve as the first electrode.

### REFERENCE SIGNS LIST

10, 310 cylindrical battery
11 positive electrode
11a, 111a, 211a positive electrode current collector
11b, 111b, 211b positive electrode mixture layer
11c, 111c, 211c positive electrode current collector exposed portion
12 negative electrode
12a negative electrode current collector
12b negative electrode mixture layer
12c negative electrode current collector exposed portion
13 separator
14 electrode assembly
14a hollow portion
15 battery case
16 outer housing can
17 sealing assembly
18 insulating plate
19 insulating plate
19a through hole
20, 120, 220 positive electrode lead portion
21 negative electrode lead portion
24, 124, 214 insulating tape
25 insulating tape
27 sealing plate
27a lower surface
28 gasket
35 grooved portion
40 current collector plate
40a through hole
41 metal plate
41a through hole
45 upper surface of current collector plate
45a recess
45b bottom surface of recess
47 lower surface of metal plate
68 bottom of outer housing can

## Claims

1. A cylindrical battery comprising:
an electrode assembly including a first electrode having an elongated shape and a second electrode having an elongated shape, the first electrode having a plurality of lead portions, the first electrode and the second electrode being wound with a separator interposed therebetween;
an outer housing can having a cylindrical shape with a closed bottom, the outer housing can housing the electrode assembly; and
a sealing assembly fixed by crimping to an opening of the outer housing can,
wherein the sealing assembly includes a sealing plate and a current collector plate, the current collector plate having a through hole, and
wherein the plurality of lead portions extend through the through hole and are folded back and joined on the current collector plate.

2. The cylindrical battery according to claim 1, wherein the sealing plate is joined to an outer circumferential portion of the current collector plate.

3. The cylindrical battery according to claim 1 or 2, wherein the sealing assembly includes a metal plate disposed between the current collector plate and the sealing plate, the plurality of lead portions being held between the current collector plate and the metal plate.

4. The cylindrical battery according to claim 3, wherein the metal plate has a through hole.

5. The cylindrical battery according to any one of claims 1 to 4, wherein the current collector plate has a recess in which the plurality of lead portions are received, the recess being located to the inside of the outer circumferential portion in the radial direction.

6. The cylindrical battery according to any one of claims 1 to 5, wherein the sealing plate serves as a terminal cap.

7. The cylindrical battery according to any one of claims 1 to 6, wherein the first electrode serves as a positive electrode.
